# EUROPEAN PATENT SPECIFICATION

(11) **EP 2 798 935 B1**
(45) Date of publication and mention of the grant of the patent: **07.03.2018**
(21) Application number: 13166515.0
(22) Date of filing: 03.05.2013
(51) Int. Cl.: A01D 34/416

(54) **Vegetation cutting device**
Vorrichtung zum Scheiden von Vegetation
Dispositif de coupe de végétation

(43) Date of publication of application: 05.11.2014
(73) Proprietor: Black & Decker Inc., Newark, Delaware 19711 (US)
(72) Inventor: Bone, Graham, Carrville, Durham DH1 1LY (GB)
(74) Representative: SBD IPAdmin

(56) References cited:
- EP-A2- 0 824 854
- WO-A1-87/02215
- US-A- 4 835 867
- US-A1- 2007 214 655

## Description

The present invention relates to a vegetation cutting device. In particular the present invention relates to a feeding mechanism for a cutting line for a vegetation cutting device.

Vegetation cutting devices such as string trimmers are known power operated tools for cutting grass and other foliage and vegetation. Typically string trimmers are powered by petrol or electricity and an engine or motor drives a cutting head. The cutting head can comprise one or more rotating blades, in which case the trimmer is generally known as a brush cutter or one or more rotating cutting lines, in which case it is known as a string trimmer.

A vegetation cutting device such as a string trimmer comprises a rotating cutting head with a cutting line mounted thereto. Rotation of the cutting head causes the cutting line to rotate which defines a cutting swathe. The cutting line rotates and the leading edge of the cutting line impacts and cuts vegetation. During use of a string trimmer the cutting line can break if the line impacts a hard surface or object.

Known string trimmers can comprise a fixed length of cutting line which is fixed with respect to the cutting head. This means if the cutting line breaks, the user must disassemble the cutting head and manually replace the cutting line. Typically the cutting head can have gripper portions or require a tool remove and replace the cutting line. This can be difficult and cumbersome for the user particularly if the cutting head is heavily soiled.

WO 87/02215 discloses a cutting head for a rotary mower. The cutting head incorporates a flat flail strip which is wound on to a drum. The flat flail strip is fed out through a pivotally mounted bush which causes the strip to be twisted so that it lies substantially in the plane of the rotation of the cutting head in order to aid cutting. The flail can be coiled inside the cutting head and fed out automatically with a clutch mechanism. When the flail meets a rigid object, the flail will collapse back along the circumference of the cutting head. A problem with this cutting head is that if the flail breaks when it meets a rigid object, the cutting head can continue to dispense more flail.

Other known string trimmers with automatic cutting line feeding mechanisms are also known. Automatic feeding mechanisms do not require the user to replace the cutting line every time a portion of the cutting line breaks off. One such automatic feeding mechanism is disclosed in EP1183932B. EP1183932B comprises a feed mechanism which feeds cutting line when a portion of the cutting line breaks. The feed mechanism can comprise a counterweight which balances the free end of the cutting line when the cutting head rotates. If the cutting line breaks, the counterweight is unbalanced against the centrifugal forces of the shortened free end of the cutting line and the counterweight will move and actuate the feeding mechanism. More cutting line will be fed out until the counterweight is balanced against the cutting line and moves to a position whereby the feeding mechanism stops feeding cutting line.

A problem with this automatic feed mechanism is that the centrifugal force of the cutting line balances against a restoring force of the counterweight. This means that the feeding mechanism will feed more line if the centrifugal force acting on the cutting line is decreased. Inappropriate use of the string trimmer can reduce the centrifugal force on the cutting line even when the cutting line has not broken off. In some instances this means excessive cutting line can be fed out and this can become wrapped around the cutting head. This can be difficult for the user to untangle and can also damage the vegetation cutting device.

US4835867 discloses an apparatus for cutting vegetation. This apparatus comprises a hub 36 housing a spool 65 around which cutting line 31 is wound. The hub 36 includes a balance arm 68 arranged to move between locked and released positions depending on whether the hub is rotating, or not. In the locked position, the balance arm locates between the spool and the hub to prevent upward movement and subsequent rotation of the spool. In the released position, the balance arm is retracted so as to enable the spool to move upwardly and then rotate to release more cutting line.

Embodiments of the present invention aim to address the aforementioned problems.

According to the present invention there is a rotatable cutting head for a vegetation cutting device comprising: a rotatable spool having a cutting line wound thereon, a free end of the cutting line being arranged to exit the cutting head via an opening; a feeding mechanism configured allow the spool to rotate and feed cutting line from the spool when the free end is shorter than a predetermined length; a moveable locking mechanism configured to move between a locking position in which the locking mechanism engages the feeding mechanism and stops the feeding mechanism from feeding the cutting line and a release position in which the feeding mechanism can feed the cutting line; and a moveable eyelet mounted at the opening for receiving the free end of the cutting line, the moveable eyelet configured to move between a first position and a second position; wherein the locking mechanism is coupled to the moveable eyelet, and the locking mechanism is configured to move between the release position and the locking position when the moveable eyelet moves from the first position to the second position.

This means that when the cutting head is forced up against a solid object, the feeding mechanism cannot feed out more cutting line because the moveable locking mechanism will engage and stop the feeding mechanism from releasing more cutting line. In this way the feeding mechanism will not overfeed when the cutting head is up against heavy vegetation and the cutting line will only feed out when no forces are incident on the cutting line. This will prevent an excessive amount of cutting line becoming wrapped around the cutting head. In addition this will also prevent a continual process of the cutting line being broken when pushed up against a rigid object and new replacement cutting line being fed out. The moveable locking mechanism actuated by the moveable eyelet prevents damage to the cutting head and decreases wasted cutting line.

Preferably the moveable eyelet and the moveable locking mechanism are pivotable. Alternatively or additionally the moveable eyelet is slidable with respect to the cutting head.

Preferably the locking mechanism comprises a pivotable locking lever configured to pivot into locking engagement with the feeding mechanism.

Preferably the locking lever comprises a gripping engagement portion to increase the friction between the locking lever and the feeding mechanism. Additionally or alternatively the feeding mechanism comprises a hook portion to catch the locking lever. This means that the locking lever is less likely to accidentally disengage from the feeding mechanism.

Preferably the moveable eyelet is integral with the locking mechanism. This means that the cutting head has less parts and is easier to manufacture. Preferably the centre of mass of the moveable locking mechanism is substantially aligned with the axis of rotation of the moveable locking mechanism. Alternatively the moveable eyelet is mechanically connected to the locking lever with linkages.

Preferably the feeding mechanism comprises a moveable counterweight for balancing centrifugal forces of a predetermined length of the free end of the cutting line, wherein the counterweight is moveable between a balanced position in which the counterweight prevents relative movement of the spool with respect to the cutting head and an unbalanced position in which the counterweight allows relative movement of the spool with respect to the cutting head thereby permitting the cutting line to be fed. In some embodiments the counterweight is integral with a peg for running in a track on the spool. The counterweight then controls the movement of the peg in the track as the counterweight is balanced. Preferably when locking mechanism is in the locked position, the locking lever blocks the path of the counterweight thereby preventing the counterweight moving into the unbalanced position.

Preferably when the locking mechanism is in the locked position, the counterweight is moveable from the unbalanced position to the balanced position. This means that the counterweight will be allowed to return to a normal balanced position even if the moveable locking mechanism moves to a locking position when the counterweight is unbalanced. In other words the counterweight is not locked by the locking lever in the unbalanced position.

Preferably the locking mechanism is configured to be in the release position when the free end of the cutting line does not exert a pivoting force on the pivotable eyelet when the cutting head is rotating. Alternatively the locking mechanism is configured to be in the release position when the free end of the cutting line does not exert a pivoting force on the movable eyelet above a predetermined threshold force when the cutting head is rotating.

Preferably the locking mechanism is configured to be in the locked position when the free end of the cutting line exerts a pivoting force on the movable eyelet. Alternatively the locking mechanism is configured to be in the locked position when the free end of the cutting line exerts a pivoting force on the movable eyelet above a predetermined threshold force. Preferably when the cutting head is stationary the locking mechanism is in the locked position. This means that the locking mechanism is in the locked position when a spool is installed in the cutting head.

Preferably a rotatable sleeve is mounted on the spool. The sleeve protects the cutting line before the spool accessory is installed in the vegetation cutting device. Preferably the rotatable spool comprises a sleeve having a spool eyelet, the sleeve being fixed with respect to the cutting head such that the spool eyelet is aligned with the movable eyelet. This means that the cutting line does not exert a turning moment on the pivoting eyelet from the cutting line deviating through an angle from the point the cutting line leaves the spool to the pivoting eyelet. Instead the spool eyelet deflects the cutting line between the point the cutting line leaves the spool and the pivoting eyelet. This means that the cutting line inside the cutting head will not cause the pivoting eyelet to move.

Preferably the pivotable eyelet is mounted on the cutting head or the rotatable spool.

According to an aspect of the present invention there is a kit of parts comprising: the rotatable cutting head of the present invention; and a cap for mounting on a rotatable cutting head for a vegetation cutting and having an opening through which the cutting line is arranged to exit said cap. Various other aspects and further embodiments are also described in the following detailed description and in the attached claims with reference to the accompanying drawings, in which:
Figure 1 shows a perspective view of the vegetation cutting device;
Figure 2 shows a perspective view of the cap with an accessory;
Figure 3 shows a plan view of the cap with the accessory;
Figure 3a shows a perspective view of the moveable eyelet and moveable locking mechanism;
Figure 4 shows a plan view of the cap with the accessory;
Figure 5 shows an exploded perspective view of the accessory and the cap;
Figure 6 shows a plan view of the cap without the accessory;
Figure 7 shows an underneath plan view of the spool;
Figures 8 to 12 show more an underneath plan views of the spool in different positions.

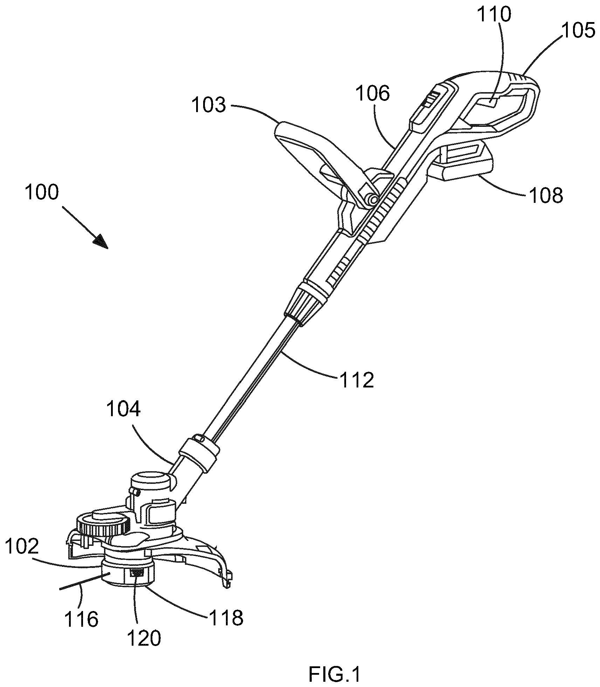

Figure 1 shows a perspective view of a vegetation cutting device or string trimmer 100. Typically the vegetation cutting device 100 is a string trimmer and the term string trimmer will be used hereinafter, but the vegetation cutting device can alternatively be other devices suitable for cutting vegetation. For example the vegetation cutting device can be a lawn mower comprising a cutting line.

In some embodiments the string trimmer 100 comprises a cutting head housing 104 for housing a motor (not shown) and other components. The cutting head housing 104 can comprise two clam shell portions which are fixed together to enclose the motor and other components. A cutting head 102 is rotatably mounted to the cutting head housing 104 and the cutting head 102 connected to the motor via a rotatable drive shaft (not shown). The cutting head comprises a cutting element 116 configured to cut vegetation when the cutting head 102 is rotated. The cutting element 116 in some embodiments is a flexible element or filament and shall be hereinafter referred to as a cutting line 116.

The cutting head housing 104 is connected to a first end of a shaft 112 and a handle housing 106 is connected to a second end the shaft 112. The handle housing 106 comprises a secondary handle 103 and a primary handle 105 mounted on the handle housing 106. The handles 103, 105 are configured so that the user can grip and operate the string trimmer 100. The handle housing 106 can comprises two clam shell portions which are fixed together to enclose circuit boards (not shown). In some alternative embodiments the motor may be housed within the handle housing 106. A battery 108 may be mounted on the handle housing 106 for providing a direct current (DC) voltage to the motor. In some alternative embodiments the string trimmer 100 can be mains powered and the battery 108 is replaced with a power cord (not shown) for providing alternating current (AC) voltage to the motor. The motor is actuated with a trigger switch 110.

The cutting head 102 comprises a cap 118 which is removeable from the cutting head 102 so that the user can install or maintain the cutting string 116. The cap 118 comprises a pair of resilient tabs 120. The resilient tabs 120 are depressible and when the user depresses the resilient tabs 120, the resilient tabs 120 disengage from the cutting head 102 and allow the user to remove the cap 118.

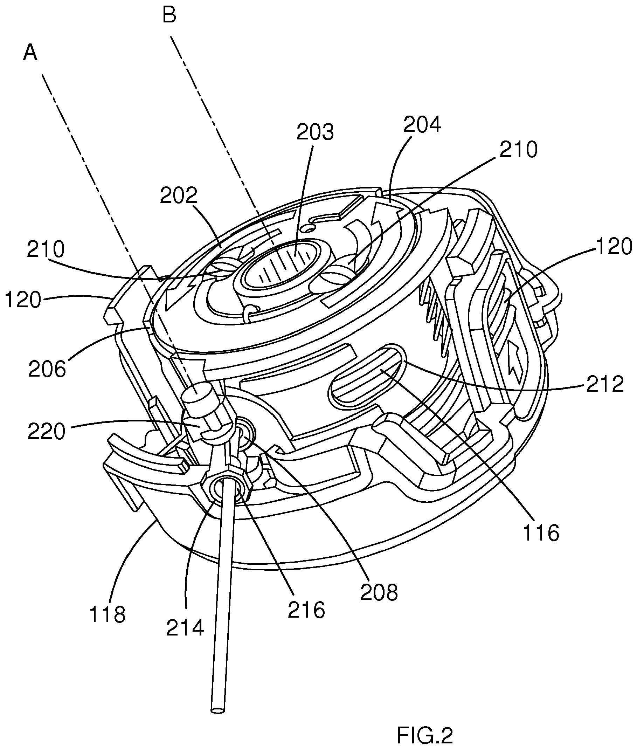

The cap 118 of the cutting head 102 will be described in further detail with respect to Figure 2. Figure 2 shows a perspective view of the cap 118 with an accessory 202 mounted therein. The accessory 202 is configured to carry and interface with the cutting head 102 to dispense cutting line 116 during use of the string trimmer 100. For the purposes of clarity the accessory 202 will be hereinafter referred to as a spool accessory 202. The spool accessory 202 is mounted on a central spindle 203 of the cap 118. The spool accessory 202 comprises a spool 204 on which the cutting line 116 is wound. The spool 204 is rotatably mounted within a spool sleeve 206. The spool sleeve 206 encases the spool 204 and protects the cutting line 116 before the spool accessory 202 is installed in the cutting head 102. A window 212 in the spool sleeve 206 shows the amount of cutting line 116 which is wound on the spool 204. The spool sleeve 206 is configured to be fixedly mounted with respect to the cap 118. When the spool accessory 202 is installed in the cutting head 102, the spool 204 can rotate with respect to the spool sleeve 206 and the cap 118. As the spool 202 rotates with respect to the cutting head 102, cutting line 116 is dispensed from the spool accessory 202. In some alternate embodiments there is no spool sleeve 206.

The free end of the cutting line 116 projects through a spool eyelet 208 mounted in the spool sleeve 206. The spool eyelet 208 is fixed with respect to the spool sleeve 206. When the spool accessory 202 is installed in the cap 118, the spool eyelet 208 ensures that the free end of the cutting line 116 is positioned in a predetermined orientation when the free end of the cutting line 116 is dispensed from the spool 204.

The spool 204 comprises finger recesses 210 for allowing the user to grip the spool 204 and manually rotate the spool 204 when installing the spool accessory 202.

When the free end of the cutting line projects through the spool eyelet 208, the free end of the cutting line 116 also projects though a moveable eyelet 214 mounted at an opening 216 of the cutting head 102. In some embodiments the moveable eyelet 214 is pivotable. Hereinafter the moveable eyelet 214 will be referred to as a pivoting eyelet 214, but the moveable eyelet may be configured to move in other ways. For example the moveable eyelet 214 may be configured to slide with respect to the cap 118.

The spool eyelet 208 deflects the cutting line 116 such that the cutting line 116 is aligned or substantially aligned with the longitudinal axis of the bore of the pivoting eyelet 214. This means that the cutting line 116 exerts a smaller turning moment on the pivoting eyelet 214 from the cutting line deviating through an angle from the point the cutting line leaves the spool 204 to the pivoting eyelet 214. The pivoting eyelet 214 is able to move easier because the bend radius of the cutting line 116 at the pivoting eyelet 214 is increased. Instead the spool eyelet 208 deflects the cutting line 116 between the point the cutting line leaves the spool 204 and the pivoting eyelet 214. This means that the cutting line 116 inside the cutting head 102 will not cause the pivoting eyelet 214 to move.

In some embodiments the free end of cutting line 116 at the point the cutting line 116 projects from the pivoting eyelet 216 is aligned along a path which is substantially radial (not shown) with respect to the cutting head 102. In other preferred embodiments the cutting line 116 at the point the cutting line 116 projects from the pivoting eyelet 216 is aligned along a path which is substantially tangential or parallel to a tangent of the cutting head 102.

The pivoting eyelet 214 is configured to actuate a moveable locking mechanism 220. In some embodiments the pivoting eyelet 214 is mechanically coupled to the moveable locking mechanism 220 and linkages (not shown) cause the moveable locking mechanism 220 to move when the pivoting eyelet 214 moves. In some other embodiments, the pivoting eyelet 214 is integral with the moveable locking mechanism 220.

The cutting line 116 exits the cutting head 102 at the opening 216 and projects therefrom. The projecting free end of the cutting line 116 sweeps through a plane and defines a cutting swathe when the cutting head 102 rotates. The pivoting eyelet 214 is configured to pivot about an axis A which is parallel or substantially parallel to the axis of rotation B of the cutting head 102. In some embodiments the pivoting eyelet is configured to move in the plane of the cutting swathe. The plane of the cutting swathe is perpendicular or substantially perpendicular to the axis of rotation B.

The pivoting eyelet 214 is configured to pivot when a force is exerted on the free end of the cutting line 116. For example, when a force is exerted on the cutting line 116 in the plane of the cutting swathe, the cutting line 116 will exert a force on the inside wall of the pivoting eyelet 214 and this will cause the pivoting eyelet 214 to rotate. In some embodiments, the pivoting eyelet 214 is configured to rotate when a force on the free end of the cutting line 116 exceeds a predetermined threshold force. In some embodiments the pivoting eyelet 214 is configured to rotate when any force is exerted on the free end of the cutting line 116.

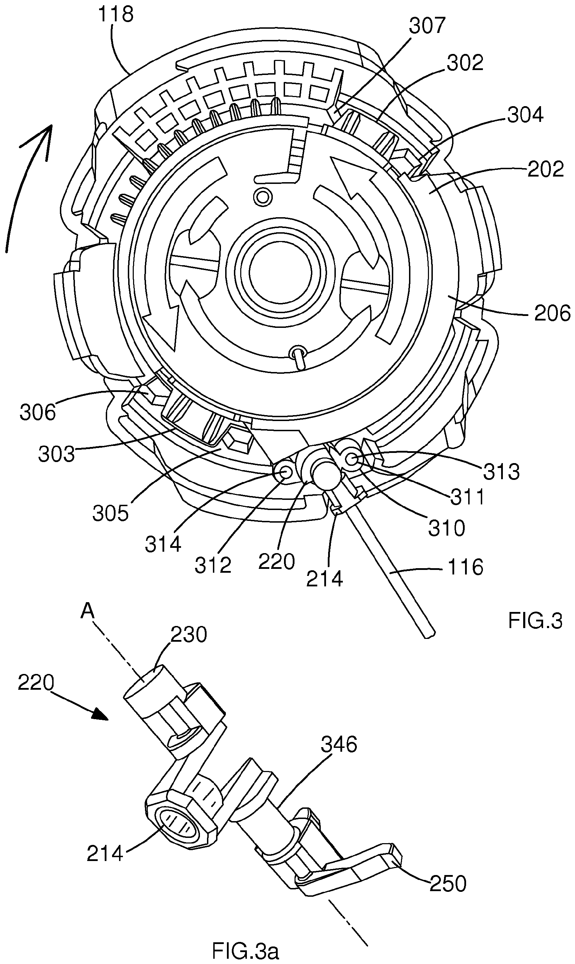

Figure 3 shows a plan view of the cap 118 with the spool accessory 202 installed therein. The spool sleeve 206 comprises engaging tabs 302, 303 which slot between upstanding fingers 304, 305, 306 and 307 of the cap 118. The engaging tabs 302, 303 and the upstanding fingers 304, 305, 306, 307 provide a friction fit between the spool sleeve 206 and the cap 118 and the spool sleeve 206 and the cap 118 are fixed with respect to each other.

The moveable locking mechanism 220 is mounted at the opening 216 with a mounting clip 310. The mounting clip 310 comprises two holes 311, 312 for receiving two mounting pegs 313, 314 of the cap 118. The mounting pegs 314 are integral with the cap 118 and the mounting clip 310 is fixed with respect to the cap 118 when the mounting pegs 313, 314 are located in the mounting holes 311, 312. The mounting clip 310 comprises a pair of resilient arms 342, 344 which clip around a neck portion 346 of the moveable locking mechanism 220. The mounting clip 310 allows the moveable locking mechanism 220 to rotate but also keeps the moveable locking mechanism 220 rotatably coupled to the cap 118. The mounting clip 310 may comprise a one-time fit with the pivoting eyelet 216. This means that the mounting clip 310 may not be easily removed once the mounting clip 310 as been fixed to the cap 118. In some embodiments the mounting clip 310 comprises a longitudinal rib 352 which extends along a surface of the mounting clip 310 between the arms 342, 344. The cap 118 may have a reciprocal recess (not shown) for receiving and locating the longitudinal rib 352. The longitudinal rib 352 stiffens the mounting clip 310 and stops the arms 342, 344 of the mounting clip 310 closing up and clamping on pivoting eyelet 214 when the cutting head 102 is rotating.

In some embodiments the mounting clip is integral or coupled to the spool sleeve instead. This means that the locking mechanism 220 is part of the spool accessory 202 and the cutting line 116 can be already threaded in the pivoting eyelet 214. This means that the user would not have to thread the cutting line 116 on installation of the spool accessory 202.

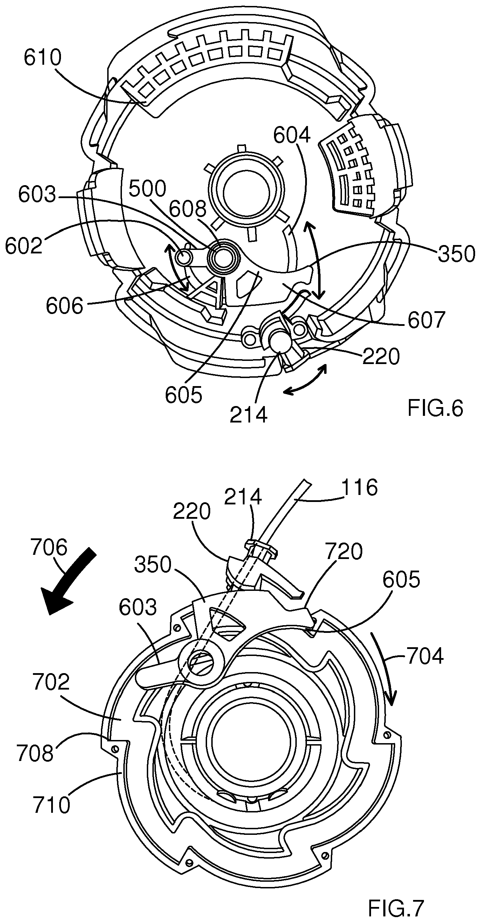

The moveable locking mechanism 220 and moveable eyelet 214 are shown in Figure 3a. The moveable locking mechanism 220 is connected to the pivoting eyelet 214. Figure 3a shows the moveable locking mechanism 220 being integral with the pivoting eyelet 214. In some embodiments (not shown) the pivoting eyelet 214 is a separate element and is mechanically coupled to the moveable locking mechanism 220 such that movement of the pivoting eyelet 214 causes movement of the locking mechanism 220. The pivoting eyelet 214 is mounted towards an upper end 230 of the moveable locking mechanism 220 which is furthest from the base of the cap 118 when the moveable locking mechanism 220 is mounted in the cap 118. In other embodiments the pivoting eyelet 214 can be located at any position along the longitudinal length of the moveable locking mechanism 220. The pivoting eyelet 214 is configured to receive the free end of the cutting line 116. The moveable locking mechanism 220 is generally longitudinal along an axis A and is configured to rotate about the longitudinal axis A. In some embodiments the moveable locking mechanism 220 is configured to pivot about axis A when the pivoting eyelet 214 pivots. The centre of mass of the moveable locking mechanism 220 is aligned with the axis of rotation of the moveable locking mechanism 220. This means that the centre of mass of the moveable locking mechanism 220 does not move with respect to the cap 118 when the moveable locking mechanism 220 rotates. The moveable locking mechanism 220 is balanced with a fixed counterweight 610 (shown in Figure 6) on the opposite side of the cap 118 to where the moveable locking mechanism 220 is mounted. Aligning the centre of mass of the pivoting eyelet 214 with its axis of rotation also means that there is no turning moment of parts of the moveable locking mechanism 220 about the axis of rotation A when the cutting head 102 is rotating.

In some alternative embodiments the centre of mass of the pivoting eyelet 214 can be offset from the axis of rotation of the pivoting eyelet 214. For example the centre of mass of the pivoting eyelet 214 can be moved away from the centre of the cutting head 102. This means that the pivoting eyelet 214 can be biased into the unlocked position and a greater force has to be exerted on the cutting line 116 to move the pivoting eyelet 214 into the locked position. In such a way the pivoting eyelet 214 can be adapted work with heavier gauged cutting lines. Alternatively the centre of mass of the pivoting eyelet 214 can be moved close to the centre of the cutting head 102 and the pivoting eyelet 214 will be biased to the locked position.

The neck portion 346 of the moveable locking mechanism 220 is located approximately midway and is configured to mate and couple with the resilient arms 344, 342 of the mounting clip 310.

A locking lever 250 protrudes from the base of the moveable locking mechanism 220. The locking lever 250 is configured mechanically couple and engage with the line feeding mechanism 350. The moveable locking mechanism 220 will be described in reference to Figures 7, 8, 9 and 10 below.

Returning to Figure 3, an arrow on Figure 3 shows the rotational direction in which the cutting head 102 rotates during operation. Figure 3 shows the pivoting eyelet 214 in a "neutral" position when the cutting head 102 is rotating and no external forces are incident on the free end of the cutting line 116. In this way the centrifugal force on the cutting line 116 urges the cutting line 116 outwards from the axis of rotation B of the cutting head 102. In the neutral position the pivoting eyelet 214 abuts the edge of the opening 216. In the neutral position the pivoting eyelet 214 is substantially orientated so that the longitudinal axis of pivoting eyelet is tangential to or tangentially parallel to the point where the cutting line is dispensed from the spool 204. This means that the turning moment of cutting line 116 as the cutting line 116 exits the spool eyelet 208 about the pivoting eyelet 214 is minimised. The cutting line 116 is not bent through tight radii and this reduces breakages to the line. In other alternative embodiments the pivoting eyelet 214 urges the cutting line 116 radially outwards from the axis of rotation B of the cutting head 102.

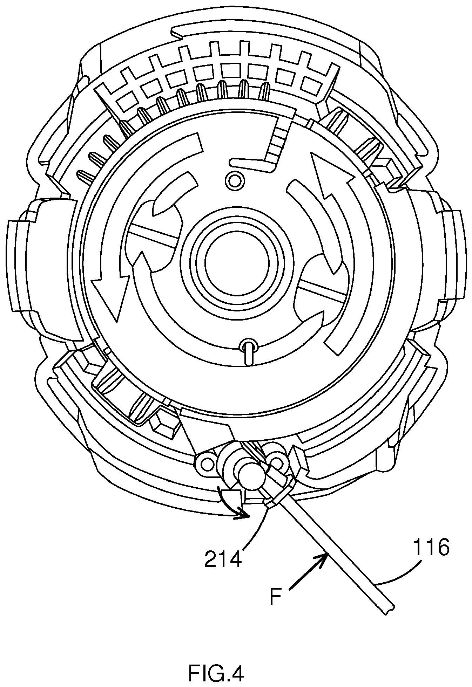

Reference will now be made to Figure 4 which shows the cap 118 with the spool accessory and the pivoting eyelet 214 in another orientation. Figure 4 is the same as Figure 3 except that the pivoting eyelet 214 is in a deflected position. The deflection of the pivoting eyelet 214 can be caused by an external force, e.g. the cutting line 116 being deflected by heavy vegetation in the path of the cutting line 116. A force F has been exerted on the free end of the cutting line 116 substantially opposite to the direction of rotation (as shown in Figure 3) and in the plane of the cutting swathe. The force on the cutting line 116 has urged the pivoting eyelet 214 away from the neutral position. In this way the pivoting eyelet 214 has rotated about the pivoting eyelet axis of rotation A anticlockwise. The pivoting eyelet 214 is integral with the moveable locking mechanism 220 and movement of the pivoting eyelet 214 between the neutral position and the deflected position causes the locking lever 250 of the moveable locking mechanism 220 to pivot between a locked position and a release position.

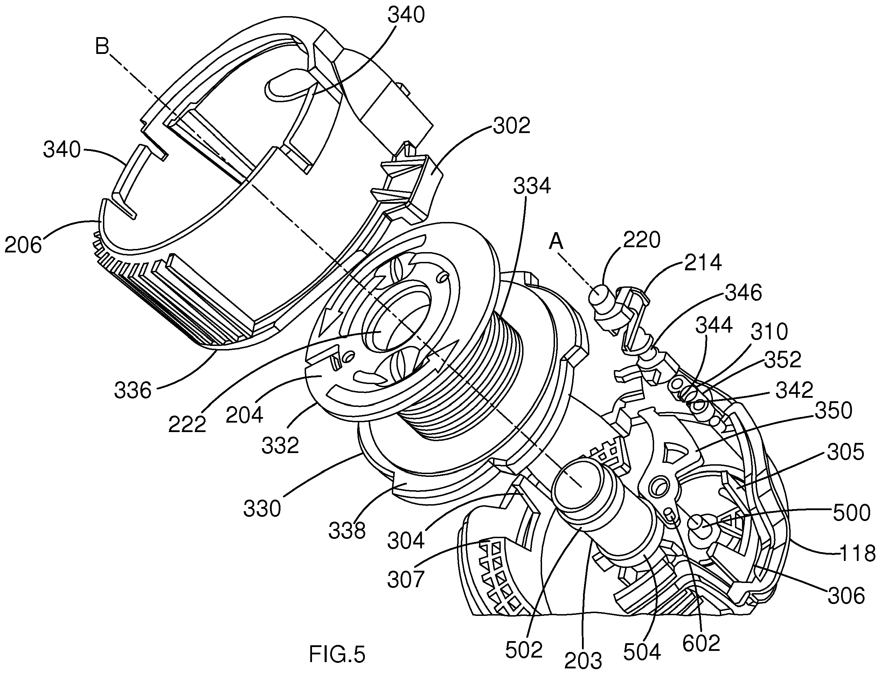

Reference is briefly made to Figure 5 which shows an exploded perspective view of the cap 118 and the spool accessory 202. The spool 204 comprises a lower flange 330 which comprises a larger effective diameter than an upper flange 332. The lower flange 330 can comprise non-circular cross section as shown in Figure 5, or alternatively the lower flange can comprise a generally circular cross section. In some embodiments the spool 204 comprises a central portion 334 which has a plurality of grooves. The grooves aid winding the cutting line 116 onto the central portion 334 of the spool 204. When assembled, the spool sleeve 206 sits over the spool 204 such that a lower lip 336 abuts and rotates against an annular surface 338 on the lower flange 330. The spool sleeve 206 is coupled to the spool 204 by resilient clips 340 of the spool sleeve 206. When the spool sleeve 206 is seated on the spool 204, the resilient clips 340 deflect around the upper flange 330 and snap back to their original position and lock underneath the upper flange 332 of the spool 204, preventing accidental separation of the spool sleeve 206 from the spool 204. The spool 204 comprises a central bore 222 though which the spindle 203 of the cap 118 is threaded when the spool accessory 202 is installed in the cap 118.

Ferrules 502, 504 are located within a central bore of the spool accessory 202 and are configured to axially locate the spool accessory 202 on the spindle 203.

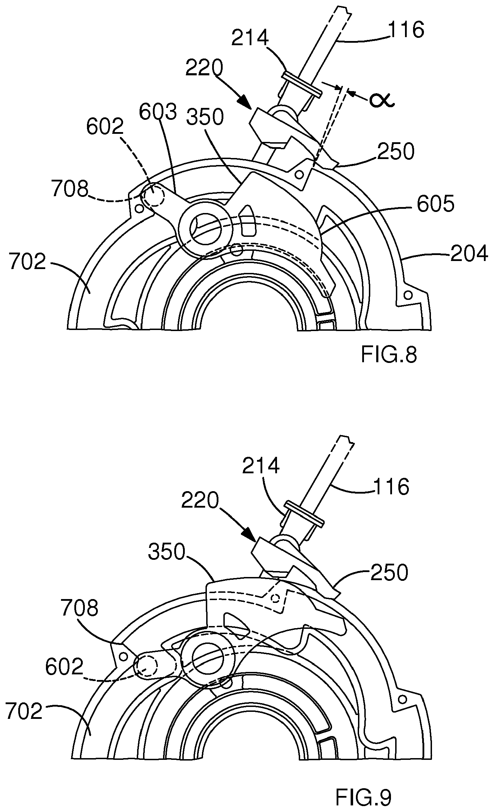

Figure 5 also shows a feeding mechanism 350. The feeding mechanism 350 is better shown in Figure 6 which shows a plan view of the cap 118 without the spool accessory 202. The feeding mechanism 350 comprises a first pivotable arm 603 and a second pivotable arm 605 mounted either side of a pivot hole 608. The pivot hole 608 is configured to receive a protrusion 500 integral with the cap 118. The feeding mechanism 350 is pivotally mounted on protrusion 500. The protrusion 500 may comprise a metal washer for reducing wear between the protrusion 500 and the pivot hole 608. The first pivotable arm 603 comprises a peg 602 for cooperating and travelling in a reciprocal track 702 on the spool 204. The peg 602 may comprise a metal cap for reducing wear between the track 702 and the peg 602. The peg 602 is configured to run in a track 702 on the spool accessory 202 which is described in further detail with reference to Figure 7 below. The second pivotable arm 605 extends in a substantially opposite direction to the first pivoting arm 603. The second pivotable arm comprises a counterweight 607. The counterweight 607 is configured to balance against the cutting line 116. The counterweight can be any suitable shape, size, material of sufficient mass to balance the mass of the cutting line 116. Different embodiments of the shape of the counterweight 607 as shown in Figures 8 to 12. The first and second pivotable arms 603, 605 are capable of pivoting through arcs as indicated by arrows in Figure 6. The moveable locking mechanism 220 is pivotable in the direction as shown by the arrow in Figure 6.

The cap 118 comprises ribs 604, 606 for guiding the feeding mechanism 350 when the feeding mechanism 350 pivots about protrusion 500. The amount of deflection the feeding mechanism 350 depends on the location of the peg 602 in the track 702 and the position of the moveable locking mechanism 220.

In order to describe the moveable locking mechanism 220 in further detail reference will first be made to the line feeding mechanism 350 as shown in Figure 7. Figure 7 shows an underneath plan view of the spool 204 but for the purposes of clarity, does not show the cap 118 or the protrusion 500 or the mounting clip 310.

The underside of the line feeding mechanism 350 is shown in Figure 7. Although not visible in Figure 7, the peg 602 is located within the track 702 of the spool 204. As mentioned previously, the counterweight 607 is for balancing a predetermined length of cutting line 116 when the cutting head 102 is in use. The predetermined length of cutting line 116 is a length of line below which, more cutting is fed out. Typically the predetermined length of cutting line will be long enough to still cut some vegetation. More cutting line 116 is fed out if the counterweight 607 and the cutting line 116 are not balanced.

When the spool accessory 202 is mounted on the cap 118 the spool accessory 202 is slid on to the spindle 203 and the spindle 203 passes through a bore 222 in the spool 204. The peg 602 coupled to the first pivotal arm 603 locates in a track 702 in the base of the lower flange 332 of the spool 204 as shown in Figure 7. In order to locate the peg 602 in the track 702, the user can manually rotate the spool 204 using the recesses 210. This rotates the spool 204 with respect to the spool sleeve 206 until the peg 602 slots into the track 702.

When the cutting head 102 is rotating, the free end of the cutting line 116 will experience a centrifugal force which will urge the free end of the cutting line 116 outwards away from the spool 204. As the cutting line 116 is urged off the spool 204 and the spool 204 will tend to unwind. The spool 204 will be biased to rotate clockwise as shown by arrow 704 in Figure 7. The rotation of the spool 204 is relative to the cutting head 102 itself which is also rotating. The direction of rotation of the cutting head 102 is shown by arrow 706.

In other words the centrifugal force exerted on the free end of the cutting line 116 generates an "unwinding force" which acts on the spool 204. This results in the cutting line 116 trying to unwind and causing the spool 204 to rotate clockwise as shown in Figure 7. The spool 204 rotates relative to the peg 602. Whilst the spool 204 is capable of rotating about the spindle 203, the rotation of the spool 204 is restricted by the interaction of the peg 602 in the track 702. The track 702 guides the position of peg 602 as the spool 204 rotates relative to the peg 602 and the cutting head 102.

However, the peg 602 stops the cutting line 116 unwinding when the peg 602 abuts a notch 708 in the track 702. In some embodiments the track 702 comprises at least one notch 708. The notch 708 is a position in the track 702 which stops the spool 204 rotating relative to the peg 602 and the cutting head 102 because the peg 602 engages with the surface of the notch 708. The peg 602 and track 702 form a ratchet and pawl arrangement. In some embodiments the track 702 can comprises a plurality of notches 708. As the peg 602 moves in the track 702 between notches 708, the spool 204 rotates relative to the cutting head 102 and cutting line 116 is fed out. In this way the portion 712 of track between notches 708 corresponds to a feeding position.

When the cutting head 102 rotates, the first and second pivotal arms 603, 605 pivot due to centrifugal force on the counterweight 607. Since the counterweight 607 is integral with the first pivotable arm 603, the peg 602 moves when the counterweight 607 moves. The counterweight 607 experiences centrifugal force because the cutting head 102 is rotating and will be urged towards the periphery of the spool 204 as shown in Figure 7. As the counterweight 607 pivots and moves towards the periphery of the spool 204, the peg 602 moves towards the centre of the spool 204.

However, the peg 602 stops the cutting line 116 unwinding when the peg 602 abuts a notch 708 in the track 702. Reference is now made to Figure 8 which shows a schematic underneath plan view of the spool 204. Similar to Figure 7, the cap 118 and other components have been omitted from Figure 8 for the purposes of clarity. The free end of the cutting line 116 is partially represented for clarity and is threaded through the pivoting eyelet 214. No external forces are incident on the cutting line 116 and so the pivoting eyelet 214 is in the neutral position. The locking lever 250 of the moveable locking mechanism 220 is shown in the release position. The release position refers to a position whereby the locking lever 250 does not obstruct the path of the line feeding mechanism 350. This means that the first and second arms 603, 605 of the line feeding mechanism 350 can freely pivot about protrusion 500.

As shown in Figure 8, the peg 602 of the line feeding mechanism 350 abuts the notch 708 in the track 702. The track 702 comprises a plurality of notches and the peg 602 will abut each notch as the spool 204 and track 702 rotates relative to the peg 602. The plurality of notches divide the track 702 up in to a plurality of discrete sections along which the peg 602 can travel. In some embodiments there can be any number of notches 708 dividing up the track 702. Each discrete section of track allows the spool 204 to rotate a predetermined amount. The peg 602 travelling along a single track section corresponds to the minimum cutting line length which can be fed when the feeding mechanism is actuated.

The notch 708 is held in engagement with the peg 602 due to the centrifugal force generated by the cutting head 102 rotating. The peg 602, by virtue of the counterweight 607 generates a "biasing force" which acts on the spool 204 between the peg 602 and the notch 708 and opposes the unwinding force. When the line breaks, the mass of the free end of the cutting line 116 is reduced. This means that the free end of the cutting line 116 is below a threshold feed length. This means that the unwinding force applied to the spool 204 by the free end of the cutting line 116 is reduced due to the reduction in the centrifugal force generated by the smaller mass of the shorter free end of the cutting line 116. At this point the biasing force of the counterweight 607 becomes greater than the unwinding force of the spool 204 and the counterweight 607 pivots such that the counterweight 607 is adjacent the periphery of the spool 204. As cutting line 116 is wound off and the spool 204 rotates with respect to the cutting head 102, the spool 204 will rotate clockwise as shown in Figure 8.

Figure 9 shows a schematic underneath plan view of the spool 204. Figure 9 is the same as Figure 8 except that the line feeding mechanism 350 has pivoted through its full extent such that the second pivotable arm 605 is adjacent the outer periphery of the spool 204. The peg 602 is then able to move in the track 702 and along the surface of the notch 708. As this happens the first pivotable arm 603 will pivot towards the centre of the spool 204 and the peg 602 will move out of contact with the notch 708.

In some embodiments the flat surface of the notch 708 is not in a completely radial direction and forms an angle with the outer wall 710 of the spool 204 slightly towards the direction of rotation of the cutting head 102. Figure 8 shows that the surface of the notch deviates by an angle α from a radial direction. This means that the spool 204 must rotate slightly anticlockwise for the peg 602 to move towards the centre of the spool 204 to become disengaged. This means that the peg 602 is less likely to accidently feed line. For example by the peg 602 bouncing out of engagement with the notch 708.

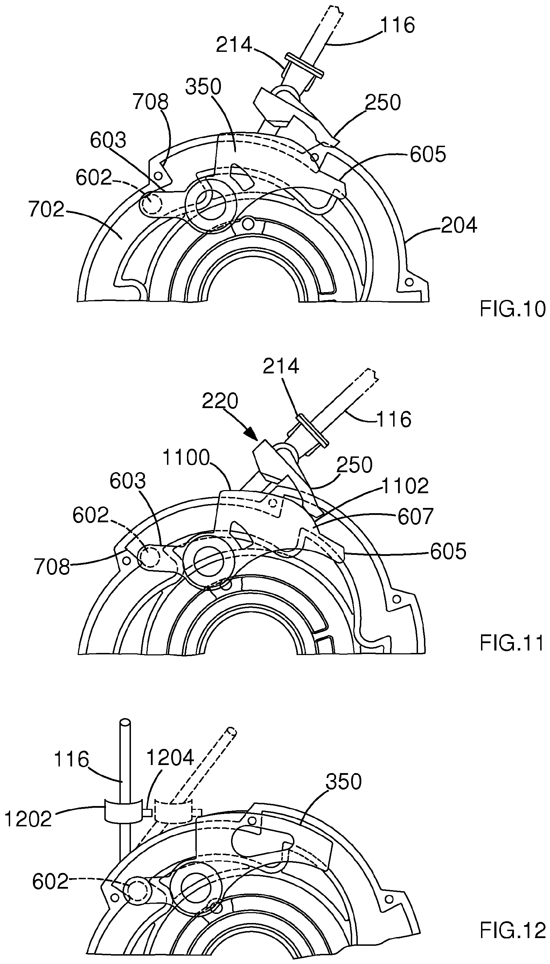

Figure 10 which shows a schematic underneath plan view of the spool 204. Figure 10 is the same as Figures 8 and 9 except that the peg 602 is freely moving in the track 702. At the same time the feeding mechanism 350 is represented with a partial opacity so that the underlying peg 602 and track 702 is also visible. Figure 10 shows the peg 602 after disengaging with the notch 708. Here the spool 204 is able to rotate freely with respect to the cap 118 and the spool sleeve 206. This means that the spool 204 feeds out more cutting line 116 as it moves relative to the cap 118. The peg 602 will continue moving in the track 702 and will abut against another notch 708. If the mass of the cutting line 116 is insufficient to balance against the counterweight 607, the feeding mechanism 350 will again pivot and feed more line out repeating the process described in Figures 8, 9 and 10. The spool 204 will stop rotating when sufficient cutting line 116 has been dispensed and the counterweight 607 is balanced against the free end of the cutting line 116. At this point the feeding mechanism 350 is not able to pivot and no additional cutting line 116 will be fed out.

Figures 8, 9 and 10 describe the feeding mechanism 350 operating when the moveable locking mechanism 220 is in the release position. Figure 11 shows a schematic underneath plan view of the spool 204 with the moveable locking mechanism 220 in the locking position. Figure 11 shows the second pivotable arm 605 and the counterweight 607 of feeding mechanism 350 being urged towards the periphery of the spool 204.

When a force is exerted on the cutting line 116, this causes the pivoting eyelet 214 to pivot about the axis A of the moveable locking mechanism 220 from a first position (or neutral position) to a second position (or deflected position). For example the user has placed the cutting head 102 in the proximity of heavy vegetation and the heavy vegetation is causing the pivoting eyelet 214 to pivot. At the same time the moveable locking mechanism 220 also pivots and the locking lever 250 pivots from the release position to the locking position.

When in the locking position the locking lever 250 prevents the feeding mechanism 350 from pivoting through its full extent. The locking lever 250 abuts the second pivotable arm 605 at a point mid way in the path of the second pivotable arm 605. By restricting the movement of the second pivotable arm 605, the movement of the first pivotable arm 603 is also restricted. In particular the first pivotable arm 603 is prevented from moving along the full face of the notch 708. This means that the peg 602 cannot move free from the notch 708. Therefore irrespective of whether the counterweight 607 is unbalanced and more cutting line 116 could be fed out, no cutting line 116 is fed because the feeding mechanism 350 is locked by the moveable locking mechanism 220. The feeding mechanism 350 will be prevented from feeding so long as the moveable locking mechanism 220 is in the locked position. When the external force is removed from the cutting line 116, the moveable locking mechanism 220 will return to the release position as shown in Figure 8. Only when the external force is removed from the cutting line 116, will the feeding mechanism 350 be able to feed out more line.

In normal operation when no external forces are exerted on the cutting line 116, the moveable locking mechanism 220 will return to the release position as shown in Figures 8, 9 and 10. The moveable locking mechanism 220 will return to the release position where the locking lever does not block the feeding mechanism 350 by virtue of centrifugal force on the cutting line 116. The centrifugal force on the cutting line 116 is a restoring force and will cause the pivoting eyelet 214 to return to the neutral position. The pivoting of the pivoting eyelet 214 will cause the moveable locking mechanism 220 to return to the release position. Alternatively or additionally in some embodiments the moveable locking mechanism 220 is biased with a spring or the like to urge the moveable locking mechanism 220 to the release position.

In some embodiments the moveable locking mechanism 220 will move only when the external force exceeds a predetermined force. For example the friction between the moveable locking mechanism 220 and the mounting clip 310 can be increased. This means that in some embodiments, the moveable locking mechanism 220 will move to the locked position when the external force on the line is excessive.

In some embodiments an engaging face of the locking lever facing and configured to engage with the feeding mechanism comprises means for increasing a friction. The means for increasing friction can be grooves, or a rough surface or any means suitable for increasing the friction between the engaging faces of the locking lever 250 and the feeding mechanism 350.

The feeding mechanism 350 can be a plurality of different shapes as shown in Figures 7, 11 and 12. Figure 11 shows a preferred embodiment wherein the outer surface 1100 of the second pivotable arm 605 comprises a smooth arcuate shape. The second pivotable arm 605 comprises a profile with a raised bump portion 1102. The raised bump portion 1102 comprises a camming profile such that the locking lever 250 is pushed back towards the unlocking position if there is no force being exerted on the cutting line 116. This means that there are no features of the feeding mechanism 350 or the locking lever 250 which prevent the pivoting eyelet 214 from pivoting. If the feed lever became jammed against the feeding mechanism 350, the locking lever 250 could be subjected to a large shock and be snapped off. In some alternative embodiments the second pivotable arm can comprise a projection 720 as shown in Figure 7.

In some other embodiments the pivoting eyelet 214 can be replaced with another eyelet which is moveable but not necessarily pivotable. For example in an alternative embodiment the moveable eyelet can be slidable along the opening 216 as shown in Figure 12. Figure 12 shows a schematic underneath plan view of the spool 204 and is exactly the same as Figure 11 except the moveable eyelet different and the cutting line 116 exits the spool 202 in a different place. Linkages between the slidable eyelet and the moveable locking mechanism cause the sliding action of the slidable eyelet to move the moveable locking mechanism between the locked position and the released position. In Figure 12 the cutting line 116 is threaded through a slidable eyelet 1202. The slidable eyelet 1202 comprises a projection 1204 configured to stop the feeding mechanism 350 from pivoting. The slidable eyelet 1202 is also shown in a deflected position which is represented by dotted lines. In the deflected position the projection 1204 abuts the feeding mechanism 350 and is preventing the feeding mechanism 350 from moving such that the peg 602 moves clear of the notch 708. Although Figure 12 shows an alternative moveable eyelet 1202, the feeding mechanism 350 could also be used with the pivoting eyelet 214 described in the embodiments shown in Figures 1 to 11.

Embodiments of the present invention have been discussed with particular reference to the examples illustrated. However it will be appreciated that variations and modifications may be made to the examples described within the scope of the appended claims.

## Claims

1. A rotatable cutting head (102) for a vegetation cutting device (100) comprising:
a rotatable spool (204) having a cutting line (116) wound thereon, a free end of the cutting line being arranged to exit the cutting head (102) via an opening;
a feeding mechanism (350) configured allow the spool (204) to rotate and feed cutting line (116) from the spool when the free end is shorter than a predetermined length;
a moveable locking mechanism (220) configured to move between a locking position in which the locking mechanism engages the feeding mechanism (350) and stops the feeding mechanism from feeding the cutting line (116) and a release position in which the feeding mechanism can feed the cutting line;
**characterised in that** a moveable eyelet (214) is mounted at the opening for receiving the free end of the cutting line (116), the moveable eyelet configured to move between a first position and a second position;
wherein the moveable locking mechanism (220) is coupled to the moveable eyelet (214), and the locking mechanism is configured to move between the release position and the locking position when the moveable eyelet moves from the first position to the second position.

2. A cutting head according to claim 1 wherein the moveable eyelet (214) and the moveable locking mechanism (220) are pivotable.

3. A cutting head according to claims 1 or 2 wherein the locking mechanism (350) comprises a pivotable locking lever (250) configured to pivot into locking engagement with the feeding mechanism (350).

4. A cutting head according to claim 3 wherein the locking lever (250) comprises a gripping engagement portion to increase the friction between the locking lever and the feeding mechanism (350).

5. A cutting head according to any of claims 2 to 4 wherein the moveable eyelet (214) is integral with the locking mechanism (220).

6. A cutting head according to any of claims 4 to 5 wherein the feeding mechanism (350) comprises a moveable counterweight (607) for balancing centrifugal forces of a predetermined length of the free end of the cutting line (116), wherein the counterweight is moveable between a balanced position in which the counterweight prevents relative movement of the spool (204) with respect to the cutting head (102) and an unbalanced position in which the counterweight allows relative movement of the spool (204) with respect to the cutting head (102) thereby permitting the cutting line to be fed.

7. A cutting head according to claim 6 wherein the locking mechanism (220) is in the locked position, the locking lever (250) blocks the path of the counterweight (607) thereby preventing the counterweight moving into the unbalanced position.

8. A cutting head according to claims 6 or 7 wherein when the locking mechanism (220) is in the locked position, the counterweight (607) is moveable from the unbalanced position to the balanced position.

9. A cutting head according to any of the preceding claims wherein the centre of mass of the moveable eyelet (214) and the locking mechanism (220) is substantially aligned with the axis of rotation of the moveable eyelet and the locking mechanism.

10. A cutting head according to any of the preceding claims wherein the locking mechanism (220) is configured to be in the release position when the free end of the cutting line (116) does not exert a pivoting force on the moveable eyelet (214).

11. A cutting head according to any of the preceding claims wherein the locking mechanism (220) is configured to be in the locked position when the free end of the cutting line (116) exerts a pivoting force on the moveable eyelet (214).

12. A cutting head according to any of the preceding claims wherein the rotatable spool (204) comprises a sleeve (206) having a spool eyelet (208), the sleeve being fixed with respect to the cutting head (102) such that the spool eyelet (208) is aligned with the moveable eyelet (214).

13. A cutting head according to any of the preceding claims wherein the moveable eyelet (214) is mounted on the cutting head (102) or the rotatable spool (204).

14. A kit of parts comprising:
a rotatable cutting head (102) as claimed in claim 1; and
a cap (118) for mounting on a rotatable cutting head (102) for a vegetation cutting device (100) and having an opening through which the cutting line (116) is arranged to exit said cap.

## Patentansprüche

1. Drehbarer Schneidkopf (102) für eine Bewuchsschneidvorrichtung (100), umfassend:
eine drehbare Rolle (204) mit einer darauf gewickelten Schneidleitung (116), wobei ein freies Ende der Schneidleitung derart angeordnet ist, dass es den Schneidkopf (102) über eine Öffnung verlässt;
einen Zuführungsmechanismus (350), der konfiguriert ist, der Rolle (204) zu ermöglichen, sich zu drehen und die Schneidleitung (116) von der Rolle zuzuführen, wenn das freie Ende kürzer ist als eine vorbestimmte Länge;
einen beweglichen Arretiermechanismus (220), der konfiguriert ist, sich zwischen einer Arretierposition, in welcher der Arretiermechanismus in den Zuführungsmechanismus (350) eingreift und den Zuführungsmechanismus dabei stoppt, die Schneidleitung (116) zuzuführen, und einer Freigabeposition, in welcher der Zuführungsmechanismus die Schneidleitung zuführen kann, zu bewegen;
**dadurch gekennzeichnet, dass** eine bewegliche Öse (214) an der Öffnung befestigt ist, um das freie Ende der Schneidleitung (116) aufzunehmen, wobei die bewegliche Öse konfiguriert ist, sich zwischen einer ersten Position und einer zweiten Position zu bewegen;
wobei der bewegliche Arretiermechanismus (220) mit der beweglichen Öse (214) gekoppelt ist und der Arretiermechanismus konfiguriert ist, sich zwischen der Freigabeposition und der Arretierposition zu bewegen, wenn sich die bewegliche Öse von der ersten Position zur zweiten Position bewegt.

2. Schneidkopf nach Anspruch 1, wobei die bewegliche Öse (214) und der bewegliche Arretiermechanismus (220) schwenkbar sind.

3. Schneidkopf nach den Ansprüchen 1 oder 2, wobei der Arretiermechanismus (350) einen schwenkbaren Arretierhebel (250) umfasst, der konfiguriert ist, in einen Arretiereingriff mit dem Zuführungsmechanismus (350) zu schwenken.

4. Schneidkopf nach Anspruch 3, wobei der Arretierhebel (250) einen Greifeingriffsabschnitt umfasst, um die Reibung zwischen dem Arretierhebel und dem Zuführungsmechanismus (350) zu erhöhen.

5. Schneidkopf nach einem der Ansprüche 2 bis 4, wobei die bewegliche Öse (214) mit dem Arretiermechanismus (220) ein Ganzes bildet.

6. Schneidkopf nach einem der Ansprüche 4 bis 5, wobei der Zuführungsmechanismus (350) ein bewegliches Gegengewicht (607) umfasst, um Fliehkräfte einer vorbestimmten Länge des freien Endes der Schneidleitung (116) auszugleichen, wobei das Gegengewicht zwischen einer Ausgleichsposition, in der das Gegengewicht eine Relativbewegung der Rolle (204) in Bezug auf den Schneidkopf (102) verhindert, und einer Nichtausgleichsposition, in der das Gegengewicht eine Relativbewegung der Rolle (204) in Bezug auf den Schneidkopf (102) ermöglicht, beweglich ist und dadurch erlaubt, dass die Schneidleitung zugeführt wird.

7. Schneidkopf nach Anspruch 6, wobei wenn sich der Arretiermechanismus (220) in der Arretierposition befindet, der Arretierhebel (250) die Bahn des Gegengewichts (607) blockiert und dadurch verhindert, dass sich das Gegengewicht in die Nichtausgleichsposition hineinbewegt.

8. Schneidkopf nach den Ansprüchen 6 oder 7, wobei, wenn sich der Arretiermechanismus (220) in der Arretierposition befindet, das Gegengewicht (607) von der Nichtausgleichsposition zur Ausgleichsposition beweglich ist.

9. Schneidkopf nach einem der vorstehenden Ansprüche, wobei das Massenzentrum der beweglichen Öse (214) und der Arretiermechanismus (220) im Wesentlichen mit der Drehachse der beweglichen Öse und dem Arretiermechanismus ausgerichtet sind.

10. Schneidkopf nach einem der vorstehenden Ansprüche, wobei der Arretiermechanismus (220) konfiguriert ist, in der Freigabeposition zu sein, wenn das freie Ende der Schneidleitung (116) keine Schwenkkraft auf die bewegliche Öse (214) ausübt.

11. Schneidkopf nach einem der vorstehenden Ansprüche, wobei der Arretiermechanismus (220) konfiguriert ist, in der Arretierposition zu sein, wenn das freie Ende der Schneidleitung (116) eine Schwenkkraft auf die bewegliche Öse (214) ausübt.

12. Schneidkopf nach einem der vorstehenden Ansprüche, wobei die drehbare Rolle (204) eine Hülse (206) mit einer Rollenöse (208) umfasst und die Hülse in Bezug auf den Schneidkopf (102) befestigt ist, sodass die Rollenöse (208) mit der beweglichen Öse (214) ausgerichtet ist.

13. Schneidkopf nach einem der vorstehenden Ansprüche, wobei die bewegliche Öse (214) auf dem Schneidkopf (102) oder der drehbaren Rolle (204) befestigt ist.

14. Kit-of-parts, umfassend:
einen drehbaren Schneidkopf (102) nach Anspruch 1; und
eine Kappe (118) zum Anbringen an einem drehbaren Schneidkopf (102) für eine Bewuchsschneidvorrichtung (100), die eine Öffnung aufweist, durch welche die Schneidleitung (116) derart angeordnet ist, dass sie die Kappe verlässt.

## Revendications

1. Tête de coupe rotative (102) pour un dispositif de coupe de végétation (100) comprenant :
une bobine rotative (204) ayant une ligne de coupe (116) qui y est enroulée, une extrémité libre de la ligne de coupe étant agencée pour sortir de la tête de coupe (102) via une ouverture ;
un mécanisme d'alimentation (350) configuré pour permettre à la bobine (204) de tourner et de fournir une ligne de coupe (116) venant de la bobine lorsque l'extrémité libre est plus courte qu'une longueur prédéterminée ;
un mécanisme de verrouillage mobile (220) configuré pour se déplacer entre une position de verrouillage, dans laquelle le mécanisme de verrouillage s'engage sur le mécanisme d'alimentation (350) et arrête le mécanisme d'alimentation de fournir la ligne de coupe (116), et une position de libération, dans laquelle le mécanisme d'alimentation peut fournir la ligne de coupe ;
**caractérisée en ce qu'**un oeillet mobile (214) est monté dans l'ouverture pour recevoir l'extrémité libre de la ligne de coupe (116), l'oeillet mobile étant configuré pour se déplacer entre une première position et une seconde position ;
dans laquelle le mécanisme de verrouillage mobile (220) est couplé à l'oeillet mobile (214), et le mécanisme de verrouillage est configuré pour se déplacer entre la position de libération et la position de verrouillage lorsque l'oeillet mobile se déplace de la première position à la seconde position.

2. Tête de coupe selon la revendication 1, dans laquelle l'oeillet mobile (214) et le mécanisme de verrouillage mobile (220) sont pivotants.

3. Tête de coupe selon les revendications 1 ou 2, dans laquelle le mécanisme de verrouillage (350) comprend un levier de verrouillage pivotant (250) configuré pour pivoter en engagement de verrouillage avec le mécanisme d'alimentation (350).

4. Tête de coupe selon la revendication 3, dans laquelle le levier de verrouillage (250) comprend une partie d'engagement en prise pour augmenter la friction entre le levier de verrouillage et le mécanisme d'alimentation (350).

5. Tête de coupe selon l'une quelconque des revendications 2 à 4, dans laquelle l'oeillet mobile (214) fait partie intégrante du mécanisme de verrouillage (220).

6. Tête de coupe selon l'une quelconque des revendications 4 à 5, dans laquelle le mécanisme d'alimentation (350) comprend un contrepoids mobile (607) pour équilibrer les forces centrifuges d'une longueur prédéterminée de l'extrémité libre de la ligne de coupe (116), dans laquelle le contrepoids est mobile entre une position équilibrée, dans laquelle le contrepoids empêche un mouvement relatif de la bobine (204) par rapport à la tête de coupe (102) et une position déséquilibrée, dans laquelle le contrepoids permet un mouvement relatif de la bobine (204) par rapport à la tête de coupe (102), permettant de la sorte l'alimentation en ligne de coupe.

7. Tête de coupe selon la revendication 6, dans laquelle le mécanisme de verrouillage (220) est en position verrouillée, le levier de verrouillage (250) bloque le trajet du contrepoids (607), empêchant de la sorte le contrepoids de se déplacer en position déséquilibrée.

8. Tête de coupe selon les revendications 6 ou 7, dans laquelle, lorsque le mécanisme de verrouillage (220) est en position verrouillée, le contrepoids (607) est mobile de la position déséquilibrée à la position équilibrée.

9. Tête de coupe selon l'une quelconque des revendications précédentes, dans laquelle le centre de masse de l'oeillet mobile (214) et du mécanisme de verrouillage (220) est sensiblement aligné avec l'axe de rotation de l'oeillet mobile et du mécanisme de verrouillage.

10. Tête de coupe selon l'une quelconque des revendications précédentes, dans laquelle le mécanisme de verrouillage (220) est configuré pour être en position de libération lorsque l'extrémité libre de la ligne de coupe (116) n'exerce pas une force pivotante sur l'oeillet mobile (214).

11. Tête de coupe selon l'une quelconque des revendications précédentes, dans laquelle le mécanisme de verrouillage (220) est configuré pour être en position verrouillée lorsque l'extrémité libre de la ligne de coupe (116) exerce une force pivotante sur l'oeillet mobile (214).

12. Tête de coupe selon l'une quelconque des revendications précédentes, dans laquelle la bobine rotative (204) comprend une douille (206) ayant un oeillet de bobine (208), la douille étant fixe par rapport à la tête de coupe (102) de sorte que l'oeillet de bobine (208) soit aligné avec l'oeillet mobile (214).

13. Tête de coupe selon l'une quelconque des revendications précédentes, dans laquelle l'oeillet mobile (214) est monté sur la tête de coupe (102) ou sur la bobine rotative (204).

14. Kit de pièces comprenant :
une tête de coupe rotative (102) selon la revendication 1 ; et
un capuchon (118) pour monter sur une tête de coupe rotative (102) pour un dispositif de coupe de végétation (100) et ayant une ouverture à travers laquelle la ligne de coupe (116) est agencée pour sortir dudit capuchon.
